# EUROPÄISCHE PATENTANMELDUNG

(11) **EP 1 584 636 A1**
(43) Veröffentlichungstag der Anmeldung: **12.10.2005**
(21) Anmeldenummer: 04008565.6
(22) Anmeldetag: 08.04.2004
(51) Int. Cl.: C08G 18/42, C09D 175/16, C08G 18/67, C08G 18/08

(54) **Wässrige Bindemittel für strahlenhärtbare Lacke**

(71) Anmelder: Surface Specialties Austria GmbH, 8402 Werndorf (AT)
(72) Erfinder: Lunzer, Florian Dr., 8010 Graz (AT); Fraydl, Thomas, 8041 Graz (AT); Ossanna, René, 8020 Graz (AT); Awad, Rami-Raimund Dr., 8042 Graz (AT)
(74) Vertreter: Deckers, Hellmuth Alexander

(57) **Zusammenfassung**

Wasserdispergierbares Reaktionsprodukt **ABCD** aus einem Polyester **A** mit Hydroxylgruppen, Urethangruppen und olefinisch ungesättigten Gruppen, einer sterisch gehinderten Säure **B,** die mindestens zwei weitere gegenüber Isocyanaten reaktive funktionelle Gruppen aufweist, einem mehrfunktionellen Isocyanat **C** und einem Polyätherpolyol **D** mit mindestens einer olefinisch ungesättigten Gruppe, wobei die Komponenten in solchen Mengen eingesetzt sind, daß die Summe der Stoffmengen der Hydroxylgruppen in **A, B** und **D** das 0,7-fache bis Dreifache der Stoffmenge der Isocyanatgruppen in **C** beträgt, ein Verfahren zu deren Herstellung und Verwendung als Beschichtungsmittel, gegebenenfalls in Kombination mit wäßrigen Acrylatdispersionen

## Beschreibung

Die Erfindung betrifft wäßrige Bindemittel für strahlenhärtende Lacke.

Aus der EP-A 0 872 502 ist ein wasserdispergiertes strahlenhärtbares Polyurethan bekannt, dessen Vorstufe ein (meth)acryliertes (Polyäther-) Polyesterpolyol ist. Dabei wird ein Polyester, der sowohl Hydroxylgruppen als auch olefinisch ungesättigte Gruppen enthält, mit einem Additionsprodukt von epsilon-Caprolacton an ein gegebenenfalls alkoxyliertes Hydroxyalkyl(meth)acrylat, einer Bishydroxymethylalkancarbonsäure und einem Di- oder Polyisocyanat unter Addition umgesetzt, das Addukt wird in Wasser dispergiert und mit einem Mono-, Di- oder Polyamin gegebenenfalls unter Kettenverlängerung reagiert.

Gegenüber diesem Stand der Technik besteht die Aufgabe, durch ein einfacheres und abwandlungsfähiges Verfahren ein wäßriges Bindemittel für strahlenhärtbare Lacke mit ebenbürtigem Eigenschaftsniveau bereitzustellen.

Die Erfindung betrifft ein in Wasser dispergierbares Reaktionsprodukt aus einem Polyester **A** mit Hydroxylgruppen, Urethangruppen und olefinisch ungesättigten Gruppen, einer sterisch gehinderten Säure **B**, die mindestens zwei weitere gegenüber Isocyanaten reaktive funktionelle Gruppen aufweist, einem mehrfunktionellen Isocyanat **C** und einem Polyätherpolyol **D** mit mindestens einer olefinisch ungesättigten Gruppe. Der Gehalt an olefinisch ungesättigten Gruppen in dem Reaktionsprodukt beträgt bevorzugt 0,2 mol/kg bis 2,5 mol/kg, besonders bevorzugt 0,5 mol/kg bis 2,0 mol/kg, bezogen auf die Masse des Reaktionsprodukts.

Dabei werden die Komponenten bevorzugt in solchen Mengen eingesetzt, daß der spezifische Gehalt an Hydroxylgruppen in **A**, **B** und **D** 0,6 bis 3 mol/kg, bezogen auf die Masse des Festharzes, beträgt, und daß die Stoffmenge der Hydroxylgruppen das 0,7-fache bis Dreifache der Stoffmenge der Isocyanatgruppen in **C** beträgt.

Der Polyester A enthält Bausteine abgeleitet von Hydroxyverbindungen **A1** mit mindestens zwei Hydroxylgruppen, Carbonsäuren **A2** mit mindestens zwei Carbonsäuregrüppen oder mit mindestens 3 Säuregruppen, von denen mindestens eine eine Carbonsäuregruppe ist, gegebenenfalls gesättigten aliphatischen oder aromatischen Monocarbonsäuren **A3** und gegebenenfalls Hydroxycarbonsäuren **A4,** wobei bei der Verwendung von Hydroxycarbonsäuren **A4** ganz oder teilweise auf die Verwendung von Hydroxyverbindungen **A1** und /oder Carbonsäuren **A2** verzichtet werden kann, mehrfunktionellen Isocyanaten **A5** und olefinisch ungesättigten Hydroxyverbindungen **A6.**

Die Mengen der Bausteine **A1** bis **A6** werden bevorzugt so gewählt, daß der resultierende Polyester **A** eine Hydroxylzahl von 20 mg/g bis 200 mg/g aufweist. Bevorzugt beträgt der Stoffmengenanteil der Carbonsäuren mit mindestens drei Säuregruppen in den Ausgangsstoffen von 0,01 mol/mol bis 0,3 mol/mol. Es ist weiter bevorzugt, daß der Stoffmengenanteil der Hydroxyverbindungen mit drei oder mehr Hydroxylgruppen bezogen auf die Summe der Stoffmengen der Ausgangsstoffe 0,01 mol/mol bis 0,3 mol/mol beträgt.

Die Hydroxyverbindungen **A1** sind aliphatische lineare, verzweigte oder cyclische Verbindungen mit mindestens zwei Hydroxylgruppen im Molekül und 2 bis 40 Kohlenstoffatomen. Bevorzugt werden unter den Diolen Glykol, 1,2- und 1,3-Propandiol, 1,2- und 1,4-Butandiol, 1,6-Hexandiol, Neopentylglykol, unter den höherwertigen Alkoholen Glycerin, Pentaerythrit, Erythrit, Sorbit, Mannit, Trimethyloläthan und -propan sowie Ditrimethylolpropan und Dipentaerythrit.

Die Carbonsäuren **A2** sind bevorzugt aliphatische lineare, verzweigte oder cyclische Säuren mit mindestens zwei Carbonsäuregruppen oder bevorzugt aromatische Säuren mit mindestens drei Säuregruppen, von denen mindestens eine eine Carboxylgruppe ist. Als aliphatische Säuren werden Adipinsäure und die isomeren Cyclohexandicarbonsäuren bevorzugt; als aromatische Säuren werden Trimellithsäure und deren Anhydrid sowie Sulfoisophthalsäure bevorzugt.

Die gegebenenfalls eingesetzten aliphatischen oder aromatischen Monocarbonsäuren **A3** sind bevorzugt Benzoesäure und Fettsäuren mit 8 bis 26 Kohlenstoffatomen.

Die gegebenenfalls eingesetzten Hydroxycarbonsäuren **A4** sind bevorzugt Ricinolfettsäure, Hydroxybuttersäure, Hydroxyvaleriansäure und Hydroxycapronsäure, unter den aromatischen Säuren werden p-Hydroxybenzoesäure und 2-Hydroxy-6-naphthoesäure bevorzugt.

Geeignete olefinisch ungesättigte Hydroxyverbindungen **A6** weisen bevorzugt eine Hydroxylgruppe im Molekül und eine olefinisch ungesättigte Gruppe im Molekül auf. Bevorzugt sind Ester von mehrwertigen aliphatischen Alkoholen mit 2 bis 12 Kohlenstoffatomen **A61** und olefinisch ungesättigten Carbonsäuren **A62,** insbesondere Acrylsäure und Methacrylsäure. Besonders geeignet sind Hydroxyäthyl(meth)acrylat, die isomeren Hydroxypropyl(meth)acrylate, 4-Hydroxybutyl(meth)acrylat und 6-Hydroxyhexyl(meth)acrylat. Ebenso geeignet sind auch die Umsetzungsprodukte von aliphatischen Epoxidverbindungen wie beispielsweise Glycidylestern von aliphatischen Monocarbonsäuren oder Glycidyläthern von aliphatischen Monoalkoholen mit den genannten olefinisch ungesättigten Carbonsäuren.

Die sterisch gehinderte Säure **B** ist eine Säure, deren Säuregruppe unter hondensationsbedingungen mindestens um einen Faktor von 2 langsamer reagiert als die erste Carboxylgruppe der Adipinsäure.

Insbesondere sind hierfür solche Säuren geeignet, deren Säuregruppe durch voluminöse Substituenten in der Nachbarschaft in ihrer Reaktivität gehindert ist. Beispiele für derartige Säuren sind Dimethylolessigsäure, Dimethylolpropionsäure, Weinsäure sowie deren Monomethylester, und Diaminosäuren wie Bis(aminoäthyl)äthansulfonsäure. Besonders bevorzugt sind Dimethylolessigsäure und Dimethylolpropionsäure.

Geeignete mehrfunktionelle Isocyanate für die Komponenten **A5** und **C** sind aromatische oder aliphatische oder gemischt aliphatisch-aromatische Isocyanate, insbesondere Diisocyanate. Dabei sind Toluylendiisocyanat, Bis(4-isocyanatophenyl)methan, Hexamethylendiisocyanat, Isophorondiisocyanat und Tetramethylxylylendiisocyanat bevorzugt. Dabei ist es möglich, daß als Komponente **A5** und **C** jeweils unterschiedliche oder auch gleiche Isocyanate eingesetzt werden.

Das Polyätherpolyol **D** ist ein mit olefinisch ungesättigten Carbonsäuren teilweise veresterter alkoxylierter mehrwertiger Alkohol, wobei der mehrwertige Alkohol bevorzugt mindestens dreiwertig ist und die Alkoxylierung durch Umsetzen des Alkohols mit Äthylenoxid, Propylenoxid oder deren Mischungen vorgenommen wird. Der alkoxylierte Alkohol ist durch Umsetzung von 10 % bis 80 % der ursprünglich vorhandenen Hydroxylgruppen mit olefinisch ungesättigten Carbonsäuren mit olefinischen Doppelbindungen versehen, damit bleiben 20 % bis 90 % der ursprünglich vorhandenen Hydroxylgruppen erhalten.

Die Erfindung betrifft weiter ein Verfahren zur Herstellung der erfindungsgemäßen Bindemittel, wobei
- in der ersten Stufe eine Polyester-Vorstufe hergestellt wird durch Kondensation der Hydroxyverbindungen **A1,** der Carbonsäuren **A2,** gegebenenfalls der gesättigten aliphatischen oder aromatischen Monocarbonsäuren **A3** und gegebenenfalls der Hydroxycarbonsäuren **A4**, erforderlichenfalls in Gegenwart eines Katalysators für die Veresterungsreaktion,
- in einer zweiten Stufe die Polyester-Vorstufe aus dem ersten Schritt mit einem olefinisch ungesättigten, Isocyanatgruppen enthaltenen Urethan **A56** zu dem Polyester **A** umgesetzt wird, wobei das Urethan **A56** erhältlich ist durch Reaktion von einem mehrfunktionellen Isocyanat **A5** mit einer mittleren Funktionalität von ν mit einer olefinisch ungesättigten Hydroxyverbindung **A6,** wobei deren Menge so gewählt wird, daß die Stoffmenge an Hydroxylgruppen in **A6** der (v - 1)fachen Stoffmenge des Isocyanats **A5** entspricht,
- in einem separaten Schritt ein olefinisch ungesättigtes Polyätherpolyol **D** hergestellt wird durch teilweise Veresterung von alkoxylierten mehrwertigen Alkoholen **D1** mit olefinisch ungesättigten Carbonsäuren **D2,** wobei 10 bis 80 % der ursprünglich vorhandenen Hydroxylgruppen erhalten bleiben, und wobei die alkoxylierten mehrwertigen Alkohole **D1** durch Umsetzung von mehrwertigen aliphatischen Alkoholen **D1** mit Alkylenoxiden **D2,** bevorzugt Äthylenoxid, Propylenoxid und deren Mischungen,
- in einem abschließenden Schritt der Polyester **A** des zweiten Schrittes mit dem olefinisch ungesättigten Polyätherpolyol **D** und einer weiteren Menge einer olefinisch ungesättigten Hydroxyverbindung **A6** zu dem im Überschuß vorgelegten Isocyanat **C** gegeben wird und diese Mischung bis zu einem konstanten Gehalt an Isocyanatgruppen umgesetzt wird, anschließend die Säure **B** zugegeben wird, wobei die Umsetzung dann zu einem vollständigen Verbrauch der Isocyanatgruppen führt, und das Addukt nun neutralisiert und in Wasser emulgiert wird, wobei bevorzugt das in der ersten und zweiten Stufe eingesetzte Lösungsmittel durch azeotrope Destillation entfernt wird.

Durch Zusatz von weiterem Wasser wird die erhaltene feinteilige Dispersion auf einen Festkörper-Massenanteil von 40 bis 60 % eingestellt.

Mit diesen Dispersionen lassen sich wäßrige Bindemittel formulieren, die durch UV-Bestrahlung härtbare Überzüge auf beliebigen Substraten, insbesondere Metallen, Metallblechen, Coils, Holz, Holzwerkstoffen und Karton ergeben. Unter Coils werden wie üblich Wickel von Metallblechen verstanden.

Überraschenderweise hat sich ergeben, daß die Bindemittel gemäß der Erfindung auch rein physikalisch trocknende Beschichtungen ergeben, die jedoch reemulgierbar sind, sofern sie nicht durch Bestrahlung mit energiereichem Licht wie UV-Strahlung vernetzt worden sind.

In ebenso überraschender Weise hat sich ergeben, daß die erfindungsgemäßen Bindemittel sich mit wäßrigen Aciylatdispersionen in einem Massenverhältnis der Festharze von 90 : 10 bis 10 : 90 ohne Mischungslücke mischen lassen. Die Abwesenheit einer Mischungslücke wird erkennbar dadurch, daß sich bei der Mischung der wäßrigen Dispersionen kein Viskositätsanstieg zeigt, daß sich kein Bodensatz bildet, und daß beim Aufziehen auf eine Glasplatte mit anschließender Trocknung ein klarer schlierenfreier Film erhalten wird.

Die Erfindung wird durch die nachfolgenden Beispiele erläutert:

### Beispiel 1

Durch Umsetzung von 1 mol Toluylendiisocyanat und 1 mol 2-Hydroxyäthylmethacrylat wurde ein ungesättigtes halbverkapptes Isocyanat bereitgestellt.

### Beispiel 2

2775 g Rizinusöl wurden gemeinsam mit 192 g Trimellithsäureanhydrid unter Zugabe von 3 g hypophosphoriger Säure auf 150 °C erhitzt. Dann wurden 1,5 g Dibutylzinndilaurat als Katalysator zugefügt. Zur Abtrennung des bei der Veresterung gebildeten Wassers wurden 300 g Xylol zugesetzt, und das Wasser unter Rückführung des Xylols azeotrop abdestilliert. Nach Entfernung des Lösungsmittels Xylol verbleiben ca. 2900 g des veresterten Rizinusöls.

### Beispiel 3

100 g des veresterten Rizinusöls aus Beispiel 2 wurden in 30 g Methoxypropylacetat als Lösungsmittel bei 80 °C und Zusatz von Radikalfänger (Methylhydrochinon) mit 20 g des halbverkappten Isocyanats aus Beispiel 1 umgesetzt unter vollständigem Verbrauch der Isocyanatgruppen.

### Beispiel 4

310 g eines propoxylierten Trimethylolpropans (ca. 3 mol Oxypropylengruppen auf 1 mol Trimethylolpropan) wurden mit 162 g Acrylsäure unter saurer Katalyse bei 125 °C verestert, bis die Säurezahl der Reaktionsmasse unter 25 mg/g gefallen war. Nach Zugabe von Toluol wurde das Reaktionswasser durch azeotrope Destillation abgetrennt, anschließend wurden 40 g des Glycidylesters der ®Versatic-Säure (®Cardura E 10, Deutsche Resolution Chemie GmbH) zugesetzt, die Reaktion wurde bei 125 °C solange fortgesetzt, bis die Säurezahl der Reaktionsmischung unter 3 mg/g gefallen war.

### Beispiel 5

In ein Reaktionsgefäß wurden 244 g Toluylendiisocyanat, 120 g Toluol und 0,2 g p-Toluolsulfonsäure vorgelegt, die Mischung wurde auf 27 °C geheizt. Über 4 Stunden wurden 26 g der kommerziell erhältlichen Isomerenmischung von Hydroxypropylacrylat, 420 g des Esters aus Beispiel 4 und 62,5 g des veresterten Rizinusöls aus Beispiel 3 zusammen mit weiteren 0,3 g p-Toluolsulfonsäure zugegeben. Dann wurden 80 g Toluol und danach 76 g Dimethylolpropionsäure zugesetzt. Bei 100 °C wurde die Reaktionsmischung solange gerührt, bis der Isocyanatgehalt (Massenanteil an Isocyanatgruppen) in der Mischung auf unter 0,6 % gefallen war. Durch Zugabe von 12 g Lithiumhydroxid in 123 g Wasser wurde bei 98 °C neutralisiert, die Mischung wurde mit weiteren 546 g Wasser verdünnt. Das Toluol wurde azeotrop abdestilliert, anschließend wurde durch weitere Wasserzugabe auf einen Festkörper-Massenanteil von 48 % eingestellt.

### Beispiel 6

100 g des Bindemittels aus Beispiel 5 wurden mit 6 g einer 50 %igen Lösung von ®Irgacure (Photoinitiator, Ciba Specialty Chemicals) in Butylglykol versetzt. Die wäßrige Lösung wies einen pH-Wert von 6,7 und eine Viskosität von 279 mPa·s auf.

Das so hergestellte Beschichtungsmittel wurde mit zwei unterschiedlichen Schichtdicken jeweils auf eine Glasplatte aufgezogen (Naßfilmstärke 25 µm/ 150 µm) und durch Bestrahlung mit zwei Quecksilberlampen (80 W, 10 cm Entfernung, Bandgeschwindigkeit 4 m/min) gehärtet. Die Pendelhärte nach König betrug 229 s / 209 s, die Beständigkeit im Acetontest war 30 min / 2 h, die Beständigkeit im Wassertest über 8 Stunden / über 24 Stunden (Abbruch).

Bei Aufzug auf ein Eisenblech mit einer Naßfilmstärke von 120 µm und Härtung durch Bestrahlung mit zwei Quecksilberdampflampen (80 W, 10 cm Entfernung, Bandgeschwindigkeit 4 m/min) ergab sich eine Erichsen-Tiefung von 5,5 mm; ein Wert im Erichsen-Schlagtest von 60 / 30 in·lb (6,8 J / 3,4 J); und die Bewertung im Gitterschnitt-Test von 0/4.

Ohne Härtung war die Beschichtung bei Abwaschen mit Wasser ausgezeichnet reemulgierbar.

Zum Vergleich wurde ein strahlenhärtbares Beschichtungsmittel gemäß der eingangs genannten EP-A 0 872 502 eingesetzt in der ansonsten gleichen Rezeptur. Die Werte für die Erichsentiefung und die Schlagwerte waren gleich, jedoch war die nicht gehärtete Beschichtung nicht in Wasser reemulgierbar. Beim Mischen mit wäßrigen Acrylatdispersionen ergab sich bei einer 50 : 50-Mischung eine deutliche Viskositätserhöhung, die auf eine Unverträglichkeit zurückzuführen ist. Ein auf eine Glasplatte aufgetragener Film aus dieser Mischung war trüb und hatte eine runzlige Oberfläche.

## Patentansprüche

1. Wasserdispergierbares Reaktionsprodukt **ABCD** aus einem Polyester **A** mit Hydroxylgruppen, Urethangruppen und olefinisch ungesättigten Gruppen, einer sterisch gehinderten Säure **B,** die mindestens zwei weitere gegenüber Isocyanaten reaktive funktionelle Gruppen aufweist, einem mehrfunktionellen Isocyanat **C** und einem Polyätherpolyol **D** mit mindestens einer olefinisch ungesättigten Gruppe, wobei die Komponenten in solchen Mengen eingesetzt sind, daß die Summe der Stoffmengen der Hydroxylgruppen in **A**, **B** und **D** das 0,7-fache bis Dreifache der Stoffmenge der Isocyanatgruppen in **C** beträgt.

2. Wasserdispexgierbares Reaktionsprodukt **ABCD** nach Anspruch 1, **dadurch gekennzeichnet, daß** sein Gehalt an olefinisch ungesättigten Gruppen 0,2 mol/kg bis 2,5 mol/kg beträgt, bezogen auf die Masse des Reaktionsprodukts.

3. Wasserdispergierbares Reakdonsprodukt **ABCD** nach Anspruch 1, **dadurch gekennzeichnet, daß** der Polyester **A** Bausteine enthält abgeleitet von Hydroxyverbindungen **A1** mit mindestens zwei Hydroxylgruppen, Carbonsäuren **A2** mit mindestens zwei Carbonsäuregruppen oder mit mindestens 3 Säuregruppen, von denen mindestens eine eine Carbonsäuregruppe ist, gegebenenfalls gesättigten aliphatischen oder aromatischen Monocarbonsäuren **A3** und gegebenenfalls Hydroxycarbonsäuren **A4,** wobei bei der Verwendung von Hydroxycarbonsäuren **A4** ganz oder teilweise auf die Verwendung von Hydroxyverbindungen **A1** und /oder Carbonsäuren **A2** verzichtet werden kann, mehrfunktionellen Isocyanaten **A5** und olefinisch ungesättigten Hydroxyverbindungen **A6.**

4. Wasserdispergierbares Reaktionsprodukt **ABCD** nach Anspruch 1, **dadurch gekennzeichnet, daß** die Mengen der Bausteine **A1** bis **A6** so gewählt sind, daß der resultierende Polyester **A** eine Hydroxylzahl von 20 mg/g bis 200 mg/g aufweist.

5. Wasserdispergierbares Reaktionsprodukt **ABCD** nach Anspruch 1, **dadurch gekennzeichnet, daß** der Stoffmengenanteil der Carbonsäuren mit mindestens drei Säuregruppen in den Ausgangsstoffen von 0,01 mol/mol bis 0,3 mol/mol beträgt.

6. Wasserdispergierbares Reaktionsprodukt **ABCD** nach Anspruch 1, **dadurch gekennzeichnet, daß** der Stoffmengenanteil der Hydroxyverbindungen mit drei oder mehr Hydroxylgruppen bezogen auf die Summe der Stoffmengen der Ausgangsstoffe 0,01 mol/mol bis 0,3 mol/mol beträgt.

7. Wasserdispergierbares Reaktionsprodukt **ABCD** nach Anspruch 1, **dadurch gekennzeichnet, daß** die sterisch gehinderte Säure **B** ausgewählt ist aus Dimethylolessigsäure und Dimethylolpropionsäure.

8. Wasserdispergierbares Reaktionsprodukt **ABCD** nach Anspruch 1, **dadurch gekennzeichnet, daß** das olefinisch ungesättigte Polyätherpolyol **D** Bausteine enthält von alkoxylierten mehrwertigen Alkoholen **D1** und olefinisch ungesättigten Carbonsäuren **D2,** und wobei die alkoxylierten mehrwertigen Alkohole **D1** Bausteine von mehrwertigen aliphatischen Alkoholen **D11** und Alkylenoxiden **D12** ausgewählt aus Äthylenoxid, Propylenoxid und deren Mischungen enthalten.

9. Verfahren zum Herstellen von wasserdispergierbaren Reaktionsprodukten **ABCD** nach Anspruch 1, wobei
- in der ersten Stufe eine Polyester-Vorstufe hergestellt wird durch Kondensation der Hydroxyverbindungen **A1,** der Carbonsäuren **A2,** gegebenenfalls der gesättigten aliphatischen oder aromatischen Monocarbonsäuren **A3** und gegebenenfalls der Hydroxycarbonsäuren **A4**, erforderlichenfalls in Gegenwart eines Katalysators für die Veresterungsreaktion,
- in einer zweiten Stufe die Polyester-Vorstufe aus dem ersten Schritt mit einem olefinisch ungesättigten, Isocyanatgruppen enthaltenen Urethan **A56** zu dem Polyester **A** umgesetzt wird, wobei das Urethan **A56** erhältlich ist durch Reaktion von einem mehrfunktionellen Isocyanat **A5** mit einer mittleren Funktionalität von ν mit einer olefinisch ungesättigten Hydroxyverbindung **A6,** wobei deren Menge so gewählt wird, daß die Stoffinenge an Hydroxylgruppen in **A6** der (v - 1)fachen Stoffmenge des Isocyanats **A5** entspricht,
- in einem separaten Schritt ein olefinisch ungesättigtes Polyätherpolyol **D** hergestellt wird durch teilweise Veresterung von alkoxylierten mehrwertigen Alkoholen **D1** mit olefinisch ungesättigten Carbonsäuren **D2,** wobei 10 bis 80 % der ursprünglich vorhandenen Hydroxylgruppen erhalten bleiben, und wobei die alkoxylierten mehrwertigen Alkohole **D1** durch Umsetzung von mehrwertigen aliphatischen Alkoholen **D1** mit Alkylenoxiden **D2,** bevorzugt Äthylenoxid, Propylenoxid und deren Mischungen,
- in einem abschließenden Schritt der Polyester **A** des zweiten Schrittes mit dem olefinisch ungesättigten Polyätherpolyol **D** und einer weiteren Menge einer olefinisch ungesättigten Hydroxyverbindung **A6** zu dem im Überschuß vorgelegten Isocyanat **C** gegeben wird und diese Mischung bis zu einem konstanten Gehalt an Isocyanatgruppen umgesetzt wird, anschließend die Säure **B** zugegeben wird, wobei die Umsetzung dann zu einem vollständigen Verbrauch der Isocyanatgruppen führt, und das Addukt nun neutralisiert und in Wasser emulgiert wird, wobei bevorzugt das in der ersten und zweiten Stufe eingesetzte Lösungsmittel durch azeotrope Destillation entfernt wird.

10. Verwendung des wasserdispergierbaren Reaktionsprodukts **ABCD** des Anspruchs 1 als Bindemittel zum Beschichten von Substraten ausgewählt aus Metallen, Metallblechen, Coils, Holz, Holzwerkstoffen, Karton und nachfolgende Härtung durch Bestrahlen mit energiereicher Strahlung.

11. Mischungen von wasserdispergierten Reaktionsprodukten **ABCD** gemäß Anspruch 1 und Acrylatdispersionen als Bindemittel zum Beschichten von Substraten ausgewählt aus Metallen, Metallblechen, Coils, Holz, Holzwerkstoffen, Karton und nachfolgende Härtung durch Bestrahlen mit energiereicher Strahlung.
